# EUROPEAN PATENT APPLICATION

(11) **EP 4 432 410 A1**
(43) Date of publication of application: **18.09.2024**
(21) Application number: 23752254.5
(22) Date of filing: 30.01.2023
(51) Int. Cl.: H01M 10/04, H01M 50/519

(54) **BATTERY**

(30) Priority: 10.02.2022 CN 202210126010
(71) Applicant: Zhuhai Cosmx Power Co., Ltd., Zhuhai, Guangdong 519180 (CN)
(72) Inventor: WANG, Yanqing, Zhuhai, Guangdong 519180 (CN); ZONG, Yanzhen, Zhuhai, Guangdong 519180 (CN); LUO, Zihao, Zhuhai, Guangdong 519180 (CN)
(74) Representative: Bandpay & Greuter
(86) International application number: PCT/CN2023/073790
(87) International publication number: WO 2023/151474

(57) **Abstract**

The present application provides a battery including: a battery cell including a battery cell body and a tab extending from the battery cell body; a case located at a periphery of the battery cell and formed with a top sealing edge, a side sealing edge and at least one protruding portion at edges of the battery cell body, where the top sealing edge is bent towards a top end face, and the top end face is an end face in a height direction of the battery cell body, and the protruding portion is located between the top sealing edge and the side sealing edge and extends towards the top end face; and a protection board located on a side of the top sealing edge facing away from the top end face, and including a first region and a second region, where a height of the second region is greater than that of the first region; and the second region is connected with the tab, and the second region is disposed in a staggered manner with the protruding portion in a width direction of the battery cell body. According to the battery provided in the present application, the wiring length in the protection board is shortened, so that the resistance of the protection board may be effectively reduced, the power consumption of the protection board is reduced, the utilization rate of the power of the battery is improved, and the battery life of the battery may be further improved.

## Description

This application claims priority to Chinese Patent Application No. 202210126010.4 filed with the China National Intellectual Property Administration on February 10, 2022 and entitled "BATTERY", the entire content of which is incorporated herein by reference.

### TECHNICAL FIELD

The present application relates to the technical field of energy storage devices and, in particular, to a battery.

### BACKGROUND

Battery is an apparatus in which electric energy is stored, so as to supply power to an external device (fore example, a mobile phone, a tablet computer, a notebook computer, a personal digital assistant and other portable or movable electronic devices) when needed.

A battery generally includes a battery cell, a housing located at the periphery of the battery cell, a protection board electrically connected with a tab of the battery cell, and an insulating tape, etc. Specifically, protection boards may be printed circuit boards (Printed circuit boards, abbreviation, PCB), and a plurality of electronic elements are disposed on the PCB. The main function of protection boards is to connect the battery cell to an external electronic device, which can protect the battery cell.

However, in the related art, protection boards have a larger space size, which leads to the high resistance and high power consumption of protection boards, and is not beneficial to the charging and discharging of batteries and the full utilization of the power of batteries.

### SUMMARY

The present application provides a battery to at least solve the problem of high resistance and high power consumption of a protection board in the related art, which can effectively improve the utilization rate of the power of the battery.

An embodiment of the present application provides a battery, including:
a battery cell including a battery cell body and a tab extending from the battery cell body;
a case located at a periphery of the battery cell and formed with a top sealing edge, a side sealing edge and at least one protruding portion at edges of the battery cell body, where the top sealing edge is bent towards a top end face, and the top end face is an end face in a height direction of the battery cell body, and the protruding portion is located between the top sealing edge and the side sealing edge and extends towards the top end face; and
a protection board located on a side of the top sealing edge facing away from the top end face, and including a first region and a second region, where a height of the second region is greater than that of the first region; and the second region is connected with the tab, and the second region is disposed in a staggered manner with the protruding portion in a width direction of the battery cell body.

In a possible implementation, the first region is disposed opposite to the protruding portion.

In a possible implementation, the protection board includes a substrate and an encapsulation layer; and in the second region, the substrate is provided with a plurality of electronic elements, and the encapsulation layer covers the plurality of electronic elements.

In a possible implementation, a height of the second region protruding from the first region is 0.8 mm to 2.0 mm.

In a possible implementation, a length of the first region is 2 mm to 15 mm.

In a possible implementation, the height of the first region is 0.6 mm to 1.5 mm, and/or the height of the second region is 1.4 mm to 3.5 mm.

In a possible implementation, the encapsulation layer of the protection board faces the top sealing edge, the first region covers the protruding portion, or the first region abuts against the protruding portion.

In a possible implementation, the protruding portion includes a first bending section and a second bending section; and
the first bending section is attached on the top sealing edge, the second bending section is located on a side of the first bending section facing away from the top sealing edge, and the first region covers the second bending section.

In a possible implementation, the protruding portion includes a first portion, a second portion and a third portion; and
the first portion is connected with the side sealing edge, the second portion is connected with the first portion and bent towards the top end face, and the third portion is located on a side of the second portion facing away from the first portion and is connected with the top sealing edge.

In a possible implementation, a height of the protruding portion is less than or equal to a height of the second region protruding from the first region.

In a possible implementation, the encapsulation layer of the protection board is disposed to face away from the top sealing edge, and the protruding portion is bent and disposed on a side of the first region of the protection board facing away from the top sealing edge.

In a possible implementation, a height of the protruding portion is less than or equal to a height of the second region protruding from the first region.

In a possible implementation, the first region and the protruding portion are connected by a first insulation layer.

In a possible implementation, two protruding portions are provided, and the two protruding portions are located at both ends of the top end face in the width direction; and
the second region is located between the two protruding portions.

In a possible implementation, a projection of the protection board and/or the tab onto a plane where the top end face is located is located within the top end face.

In a possible implementation, the tab includes a first connection section and a second connection section, and the second connection section is connected with the battery cell body through the first connection section, and at least part of the first connection section is located in the top sealing edge, and the second connection section is configured to be connected with the protection board.

In a possible implementation, the battery cell body includes a first surface and a second surface which are opposite in a thickness direction of battery cell body, and the top sealing edge is bent towards the first surface; and
a distance between a side of the first connection section near the first surface and the first surface is greater than or equal to 0.2 mm, or a distance between a side of the first connection section near the second surface and the second surface is greater than or equal to 0.2 mm.

In a possible implementation, the second connection section is located between the protection board and the battery cell body, or the second connection section is located on a side of the protection board facing away from the battery cell body.

In a possible implementation, the second connection section is located between the protection board and the battery cell body, and a second insulation layer is disposed between the second connection section and the top sealing edge, at least part of the second connection section is attached on an outer surface of the top sealing edge through the second insulation layer, and at least the second region in the protection board is attached on the second insulation layer.

In a possible implementation, a third insulation layer is attached on a side of the protection board facing away from the battery cell body, at least part of the third insulation layer covers the protection board, and another part of the third insulation layer is connected with the battery cell body to fix the protection board.

In a possible implementation, the battery further includes a temperature sensor electrically connected with the protection board; and
a temperature sensing probe of the temperature sensor is located between the first region and the top sealing edge; or, the temperature sensing probe of the temperature sensor is disposed close to the protruding portion.

In the battery provided in the embodiments of the present application, the protection board is disposed to include the first region and the second region, and the height of the second region is set to be greater than that of the first region. For example, a plurality of components may be centrally disposed in one region of the protection board to form the second region with a larger height, as such, the thicknesses of other regions, for example, the first region, may be thinned during manufacturing, so that the space size of the protection board is reduced and the lengths of wirings in the protection board are shortened. Compared with the prior art, the resistance of the protection board can be effectively reduced, the power consumption of the protection board can reduced, the utilization rate of battery power is improved, and the battery life of the battery can be further improved. In addition, the protruding portion is disposed between the top sealing edge and the side sealing edge of the case, and the second region with higher height on the protection board is disposed in a straggered manner with the protruding portion in the width direction of the battery cell body, and thus on the one hand, the space of other regions expect for the protruding portion on the top end face of the battery may be reasonably utilized, and it is avoided that the second region of the protection board additionally occupies the height space of the battery to increase the height of the battery, thereby reducing the height size of the battery and increasing the energy density of the battery when being arranged; on the other hand, the distance between the second region of the protection board and the battery cell is reduced, so that the length of the tab for electrically connecting the second region and the battery cell is reduced, and thus the resistance and power consumption between the second region of the protection board and the battery cell are reduced, which is more conducive to the charging and discharging of the battery and the full utilization of the power of the battery.

In addition to the technical problems solved by the embodiments of the present application, technical features constituting the technical solutions and beneficial effects brought by the technical features of the technical solutions described above, other technical problems solved by the batteries provided in the embodiments of the present application, other technical features contained in the technical solutions and beneficial effects brought by these technical features will be further illustrated in detail in specific embodiments.

### BRIEF DESCRIPTION OF DRAWINGS

To describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present application and persons of ordinary skill in the art may still derive other drawings from these accompanying drawings without creative effort.
FIG. 1 is an exploded schematic structural diagram of an electronic device provided in an embodiment of the present application.
FIG. 2 is a schematic structural diagram of a battery provided in an embodiment of the present application.
FIG. 3 is a schematic structural diagram of the matching between a battery cell and a case in a battery provided in an embodiment of the present application.
FIG. 4 is another schematic structural diagram of the matching between a battery cell and a case in a battery provided in an embodiment of the present application.
FIG. 5 is yet another schematic structural diagram of the matching between a battery cell and a case in a battery provided in an embodiment of the present application.
FIG. 6 is a partially enlarged view of A in FIG. 5.
FIG. 7 is a top view of a protection board provided in an embodiment of the present application.
FIG. 8 is a side view of a protection board provided in an embodiment of the present application.
FIG. 9 is another top view of a protection board provided in an embodiment of the present application.
FIG. 10 is another side view of a protection board provided in an embodiment of the present application.
FIG. 11 is a partially enlarged view of B in FIG. 2.
FIG. 12 is a partially enlarged view of a protruding portion of a case in a battery provided in an embodiment of the present application.
FIG. 13 is another partially enlarged view of a protruding portion of a case in a battery provided in an embodiment of the present application.
FIG. 14 is yet another partially enlarged view of a protruding portion of a case in a battery provided in an embodiment of the present application.
FIG. 15 is a schematic structural diagram of a connection between a protection board and a tab in a battery provided in an embodiment of the present application.
FIG. 16 is another schematic structural diagram of a connection between a protection board and a tab in a battery provided in an embodiment of the present application.
FIG. 17 is yet another schematic structural diagram of a connection between a protection board and a tab in a battery provided in an embodiment of the present application.
FIG. 18 is still another schematic structural diagram of a connection between a protection board and a tab in a battery provided in an embodiment of the present application.
FIG. 19 is another schematic structural diagram of the matching between a battery cell and a case in a battery provided in an embodiment of the present application.
FIG. 20 is another schematic structural diagram of a battery provided in an embodiment of the present application.
FIG. 21 is a partial schematic view of C in FIG. 2.

Description of reference numbers:
10-Electronic device;
100-display screen; 200-housing; 300-battery;
300a-battery cell; 310-Battery cell body; 320-tab; 330-protection board; 340-case; 350-second insulation layer; 360-third insulation layer; 370-temperature sensor; 380-flexible printed circuit board;
311-top end face; 312-side end face; 321-first connection section; 322-second connection section; 330a-first region; 330b-second region; 331-substrate; 332-encapsulation layer; 333-nickel sheet; 341-protruding portion; 342-recess; 343-top sealing edge; 344-side sealing edge; 345, 345a, 345b-extension portion; 350a-compressible medium;
3311-electronic elements; 3411-first bending section; 3412-second bending section; 3413-first portion; 3414-second portion; 3415-third portion; 343a-main body portion; 343b-end;
371-temperature sensing probe; 372-conductive line.

### DETAILED DESCRIPTION

To make the objectives, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by persons of ordinary skill in the art without creative effort shall fall within the protection scope of the present application.

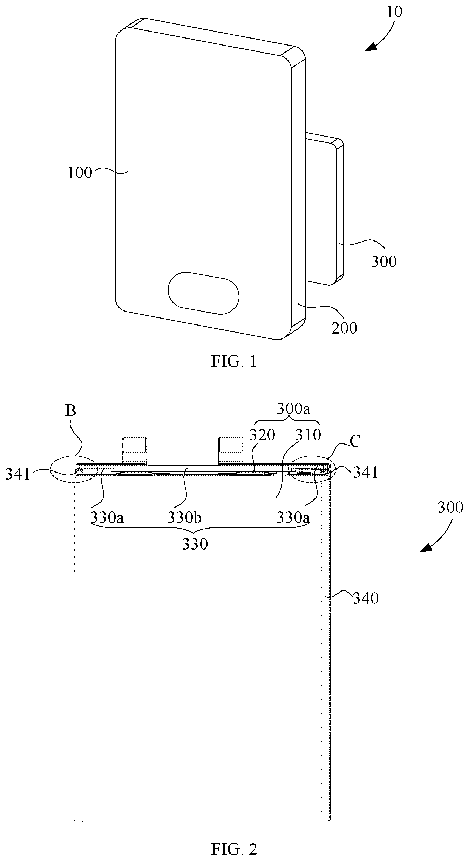

In the description of the present application, it is to be understood that an orientation or a positional relationship (if any) indicated by terms "inside", "outside", "upper", "bottom", "front" and "back" is an orientation or a positional relationship based on that shown in FIG. 1, and is only for the convenience of describing the present application and simplifying the description, and does not indicate or imply that the described apparatus or element must have a specific orientation and be constructed and operated in a specific direction, therefore, it cannot be understood as a limit on the present application.

With the development of electronic information technology, electronic devices have gradually become an integral part of people's daily life and work. Where portable electronic devices (for example, mobile phones, tablet computers, notebook computers and personal digital assistants, etc.) are deeply loved by people because of their portability.

FIG. 1 is an exploded schematic structural diagram of an electronic device provided in an embodiment of the present application.

Referring to FIG. 1, an embodiment of the present application provides an electronic device 10, where the electronic device 10 may be an aforementioned portable electronic device 10 such as a mobile phone, a tablet computer, a notebook computer or a personal digital assistant. For the convenience of understanding, in the embodiment of the present application, the electronic device 10 is taken as a mobile phone as a specific example.

Referring to FIG. 1, the electronic device 10 includes a display screen 100, a housing 200 and electronic elements disposed in the housing 200, where the electronic elements disposed in the housing 200 may be electronic elements such as a processor, a memory, a camera, a microphone and a speaker. It may be understood that other electronic elements may be disposed in the electronic device 10, which will not be described in detail in this embodiment.

When these electronic elements work, for example, the display screen 100 displays a video, an image or text information, or the processor processes and executes a received operation signal, or the speaker plays an audio signal, the electric consumption is needed. That is, the electric consumption is needed when a user uses the portable electronic device 10.

Referring to FIG. 1, in order to satisfy the use of the portable electronic device 10, the electronic device 10 generally further includes a battery 300. The battery 300 may be specifically disposed inside the housing 200 of the electronic device 10, and provides electric energy required for the operation of various electronic elements inside the electronic device 10.

It may be understood that the battery 300 may be detachably connected with the electronic device 10. For example, a back cover is disposed on a back side of the housing 200 of the electronic device 10, the back cover may be detachably connected with the housing 200, and the battery 300 may be installed to the electronic device 10 through the opened back cover.

Of course, in some optional examples, in order to improve the portability of the electronic device 10, the battery 300 may also be directly built in the housing 200 of the electronic device 10. That is, when the electronic device 10 is produced, the battery 300 may be directly packaged inside the housing 200 of the electronic device 10. Therefore, on the one hand, the portability of the electronic device 10 can be improved, and on the other hand, the stability of the electrical connection between the battery 300 and the electronic device 10 can be improved.

FIG. 2 is a schematic structural diagram of a battery provided in an embodiment of the present application.

Referring to FIG. 2, an embodiment of the present application provides a battery 300, which includes a battery cell 300a, which may be an aluminum shell battery cell, a soft pack battery cell or a cylindrical battery cell. In some specific examples, for example, when the electronic device 10 is a mobile phone, the battery cell 300a may be an aluminum shell battery cell, while when the electronic device 10 is a notebook computer, the battery cell 300a may be a cylindrical battery cell.

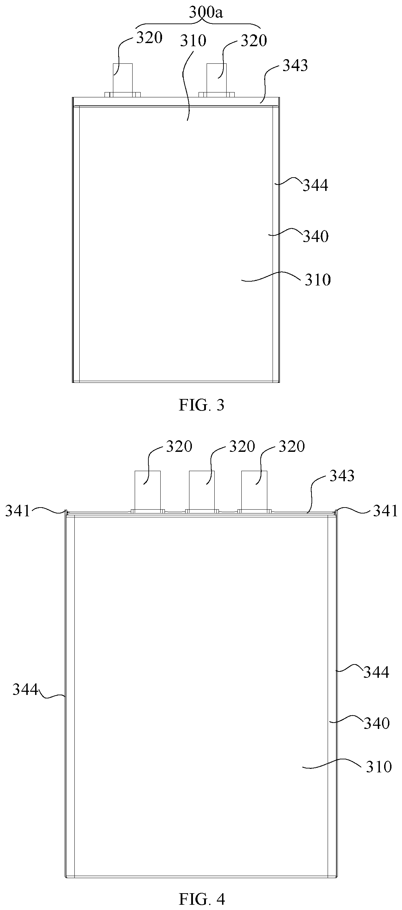

FIG. 3 is a schematic structural diagram of the matching between a battery cell and a case in a battery provided in an embodiment of the present application, and FIG. 4 is another schematic structural diagram of the matching between a battery cell and a case in a battery provided in an embodiment of the present application.

Referring to FIG. 3 and FIG. 4, in practical, an end of the battery cell 300a is connected with a tab 320. Specifically, the battery cell 300a may include a battery cell body 310 and the tab 320 extending from an end of the battery cell body 310, and the tab 320 is electrically connected with the battery cell body 310. The battery cell body 310 is electrically connected with a positive electrode tab 320 and a negative electrode tab 320, respectively. For example, there may be two tabs 320 (for example, referring to FIG. 3), and one of them is a positive electrode tab 320, and the other is a negative electrode tab 320.

Or, there may be more than two tabs 320 (for example, referring to FIG. 4). For example, an end of the battery cell body 310 is connected with three tabs 320, and one of them is a positive electrode tab 320, and the other two are negative electrode tabs 320 connected in parallel. Of course, one of them may be a negative electrode tab 320, and the other two are positive electrode tabs 320 connected in parallel, and this is not limited in the embodiment of the present application. Generally, the battery cell 300a having more than two tabs 320 is called a multiple tab battery cell.

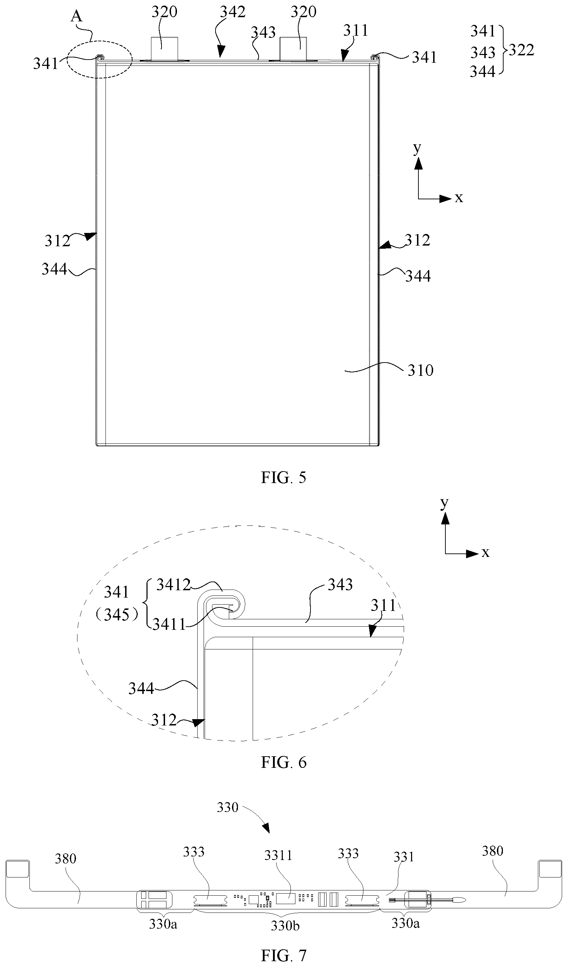

FIG. 5 is yet another schematic structural diagram of the matching between a battery cell and a case in a battery provided in an embodiment of the present application, and FIG. 6 is a partially enlarged schematic view of A in FIG. 5.

Referring to FIG. 4 to FIG. 6, in an optional design, the battery 300 further includes a case 340 that is located at an outer periphery of the battery cell body 310.

It may be understood that, in general, the battery cell body 310 cannot be directly used, and the outer periphery of the battery cell body 310 is covered/ wrapped with a case 340. In some specific examples, the case 340 may be made of an aluminum-plastic film material, where the aluminum-plastic film has high barrier property, good cold stamping formability, puncture resistance and electrolyte resistance stability, and is often used as the case 340 of the battery 300.

Referring to FIG. 3 to FIG. 6, in an optional example of the present application, the case 340 is formed with a top sealing edge 343, a side sealing edge 344 and a protruding portion 341 at edges of the battery cell 300a. The top sealing edge 343 is bent towards a top end face 311 of the battery cell body 310, for example, the top sealing edge 343 may be attached on the top end face 311 of the battery cell body 310. The side sealing edge 344 may be bent towards a side end face 312 of the battery cell body 310, for example, the side sealing edge 344 may be attached on the side end face 312 of the battery cell body 310. The top sealing edge 343 and the side sealing edge 344 are perpendicular to each other.

As described in detail in the aforementioned embodiments, the top sealing edge 343 and the side sealing edge 344 are both made of an aluminum-plastic film material. In a specific arrangement, with the bendable property of the aluminum-plastic film, the top sealing edge 343 may be folded/bent 90 degrees in a direction towards the battery cell body 310, so that the top sealing edge 343 is parallel, approximately parallel or substantially parallel to the top end face 311 of the battery cell body 310 (that is, an end face of the battery cell body 310 in a positive direction of y axis).

In some specific examples, after the top sealing edge 343 is folded 90 degrees, the top sealing edge 343 may be fixed by dispensing with glues between the top sealing edge 343 and the top end face 311.

Of course, in some examples, an insulating tape may also be attached on the top end face 311 of the battery cell body 310, and then the top sealing edge 343 is folded and attached on the insulating tape, so as to fix the top sealing edge 343.

Referring to FIG. 5, it may be understood that there are side sealing edges 344 located at two side end faces 312 of the battery cell 300a which are opposite in a width direction of the battery cell 300a (referring to a direction indicated by x in FIG. 5). That is, there are two side sealing edges 344, one of which is located at one end of the top sealing edge 343, and the other of which is located at the other end of the top sealing edge 343. For example, the side sealing edge 344 at a left side of the battery cell 300a may be attached on the side end face 312 on the left side of the battery cell body 310, and an end of this side sealing edge 344 in the y direction is connected with a left end of the top sealing edge 343; and the side sealing edge 344 at a right side of the battery cell 300a may be attached on the side end face 312 on the right side of the battery cell body 310, and an end of this side sealing edge 344 in the y direction is connected with a right end of the top sealing edge 343.

For the situation where the bendable property of the aluminum-plastic film can be used by the side sealing edges 344, the side sealing edges 344 may be folded in a direction towards the battery cell 300a, so that the side sealing edges 344 are attached on the side end faces 312 of the battery cell body 310. Of course, the side sealing edges 344 and the side end faces 312 of the battery cell body 310 may be adhered and fixed by an adhesive layer.

Referring to FIG. 5, in the embodiment of the present application, after the top sealing edge 343 is attached on the top end face 311 of the battery cell body 310 and the side sealing edges 344 are attached on the side end faces 312 of the battery cell body 310, a space needed to be occupied by the battery 300 in the electronic device 10 is reduced. That is, under the situation of providing the same installation space in the electronic device 10, a larger battery 300 may be installed, so that a volume of the battery cell body 310 of the battery cell 300a can be increased, in other words, a capacity of the battery 300 can be increased, and the battery life of the electronic device 10 can be effectively improved.

Referring to FIG. 5 and FIG. 6, it is to be noted that the top end face 311 of the battery cell body 310 is an end face of the battery cell body 310 in the height direction thereof (for example, the direction indicated by y in FIG. 5 or FIG. 6), and an end of the tab 320 extends out to the top end face 311. The side end faces 312 of the battery cell refer to two opposite end faces of the battery cell body 310 in the width direction thereof (for example, the direction indicated by x in FIG. 5 or 6).

Referring to FIG. 6, it may be understood that in the embodiment of the present application, a projection of the top sealing edge onto the battery cell in the y direction is located on the top end face 311, and projections of the side sealing edges onto the battery cell in the x direction are located on the side end faces 312.

Referring to FIG. 5 and FIG. 6, the protruding portion 341 is located between the top sealing edge and the side sealing edge and extends towards the top end face 311. The protruding portion 341 is higher than the top end face 311 and extends beyond the top sealing edge and the side sealing edge.

There may be one protruding portion 341 (not shown in the drawings), and one protruding portion 341 is located at an end of the top end face 311 in the width direction thereof and between an end of the top sealing edge 343 in the width direction thereof and the side sealing edge 344.

Of course, referring to FIG. 5, in some examples, there may be two protruding portions 341, and the two protruding portions 341 are located at both ends of the top end face 311 in the width direction thereof (referring to the direction indicated by x in FIG. 5), where one protruding portion 341 is located between an end (e.g., the left end) of the top sealing edge 343 in the width direction thereof and the side sealing edge 344, and the other protruding portion 341 is located between an end (e.g., the right end) of the top sealing edge 343 in the width direction thereof and the side sealing edge 344.

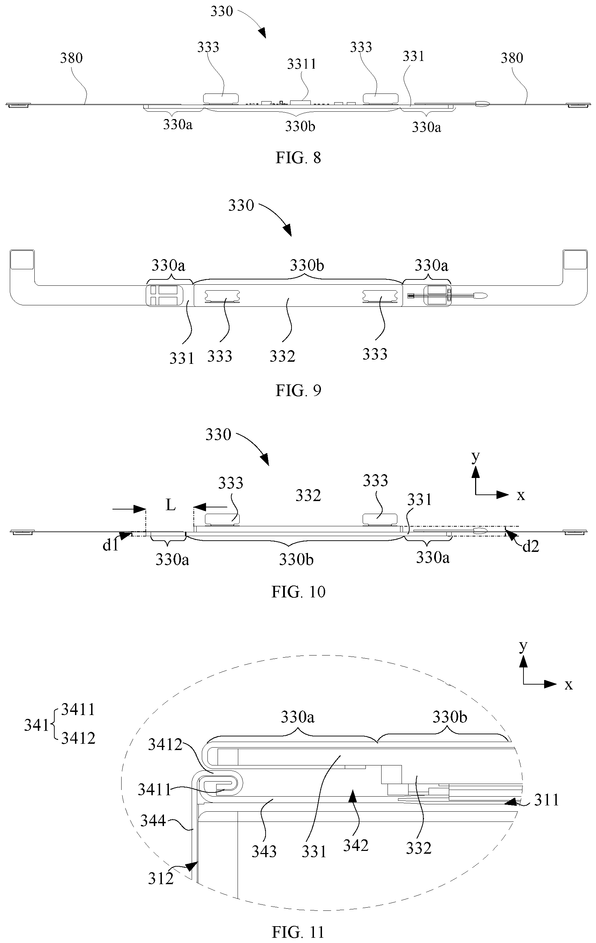

FIG. 7 is a top view of a protection board provided in an embodiment of the present application, and FIG. 8 is a side view of a protection board provided in an embodiment of the present application.

Referring to FIG. 2, FIG. 7 and FIG. 8, the battery 300 provided in the embodiment of the present application further includes a protection board 330, which is located on a side of the top sealing edge 343 facing away from the top end face 311. The protection board 330 is electrically connected with the battery cell body 310 of the battery cell 300a through the tab 320.

Specifically, in the embodiment of the present application, the tab 320 may be connected with a terminal of the protection board 330. In some specific examples, the terminal of the protection board 330 may be a nickel sheet 333 (referring to FIG. 8). The tab 320 and the nickel sheet 333 may be welded by laser welding, resistance welding, ultrasonic welding, etc.

It may be understood that an insulating protective layer may be provided at a welding position between the tab 320 and the protection board 330 to insulate the welding position so as to avoid short circuit.

Referring to FIG. 7 and FIG. 8, the protection board 330 may be made of printed circuit boards (Printed circuit boards, abbreviation PCB). For example, the protection board 330 may include a substrate 331 and a plurality of electronic elements 3311 disposed on the substrate 331. A plurality of electronic elements 3311 are electrically connected through a printed circuit on the substrate 331. The plurality of electronic elements 3311 may include a capacitor, a resistor, a MOS switch, an IC circuit, etc.

It may be understood that a main function of the protection board 330 is to connect the battery cell 300a to an external electronic device, and may protect the battery cell 300a. For example, when the battery 300 is charged by an external power supply and the inside of the battery 300 reaches a saturated state, an internal circuit of the protection board 330 may be automatically cut off, so that overcharging may be avoided.

Referring to FIG. 7 and FIG. 8, exemplarily, an electrical connector for electrically connecting the protection board 330 to an external electronic device may be a flexible printed circuit board 380, one end of the flexible printed circuit board 380 is electrically connected with part of the electronic elements 3311 on the protection board 330, and the other end of the flexible printed circuit board 380 is electrically connected with the external electronic device.

Of course, the protection board 330 has other functions, for example, protecting the battery 300 from being over-discharged. When the battery 300 is over-discharged, a discharge circuit on the protection board may be automatically cut off. This can ensure that the battery 300 may not be completely discharged, and of course, this can also ensure that the internal current of the battery 300 is stable, which avoids the battery 300 from being overheated due to discharging.

In addition, in some examples, the protection board 330 may also isolate a plurality of batteries 300 to avoid short circuit.

FIG. 9 is another top view of a protection board provided in an embodiment of the present application, and FIG. 10 is another side view of a protection board provided in an embodiment of the present application. Referring to FIG. 9 and FIG. 10, the protection board 330 may include a first region 330a and a second region 330b, and a height of the second region 330b is greater than that of the first region 330a.

It is to be noted that the height of the first region 330a refers to a distance between two sides of the first region 330a of the protection board in the height direction thereof (for example, the direction indicated by y in FIG. 10), which may be specifically shown by d1 in FIG. 10. Correspondingly, the height of the second region 330b refers to a distance between two sides of the second region 330b of the protection board in the height direction thereof (for example, the direction indicated by y in FIG. 10), which may be specifically shown by d2 in FIG. 10.

The first region 330a is a thinning region and the second region 330b is a thickening region. For example, referring to FIG. 7, in a specific arrangement, a plurality of electronic elements 3311 may be centrally disposed in one area of the protection board 330 to form the second region 330b with a larger height, so that the second region 330b is the thickening area. In other words, in the second region 330b of the protection board 330, a plurality of electronic elements 3311 are disposed on the substrate 331, as such, a thickness of other regions, such as the first region 330a, may be thinned during fabrication, thereby reducing a space size of the protection board 330 and shortening a length of wirings in the protection board 330. Compared with the prior art, the resistance of the protection board 330 can be effectively reduced, the power consumption of the protection board 330 can be reduced, the utilization rate of power of the battery 300 can be improved, and the battery life of the battery 300 can be further improved.

Referring to FIG. 8, in some examples, a plurality of electronic elements 3311 of the protection board 330 may be located on a side of the protection board 330. For example, a plurality of electronic elements 3311 are generally disposed on a surface of the substrate 331 (e.g., an upper surface of FIG. 8), and the surface of the protection board 330 on a side provided with the electronic elements 3311 forms a "convex" structure. The second region 330b is a region in the protection board 330 where the electronic elements are located, and the first region 330a is a region in the protection board 330 where no electronic element 3311 is located, so that the second region 330b is higher than the first region 330a.

In this example, the other surface of the substrate 331 (for example, a lower surface of the substrate 331 in FIG. 8), that is, a surface of the protection board 330 on a side facing away from the electronic element 3311, is flat.

Of course, in other examples, electronic elements 3311 may be disposed in the second region 330b on both sides of the protection board 330 in the y direction. For example, a plurality of electronic elements 3311 may be disposed on both the upper surface and the lower surface of the substrate 331, so that both sides of the protection board 330 in the height direction thereof are formed as convex structures, that is, both surfaces of the substrate 331 have protruding structures, and the whole protection board 330 is formed as a cross-shaped structure.

Referring to FIG. 10, in some examples, the second region 330b may be located in a middle region of the protection board 330, and correspondingly, there are first regions 330a located in edge regions of the protection board 330, that is, the first regions 330a are located on both sides of the second region 330b in the length direction of the protection board 330 respectively (referring to the direction indicated by x in FIG. 10).

For example, the protection board 330 includes two first regions 330a and one second region 330b located between the two first regions 330a. That is, there is a certain distance (referring to L in FIG. 10) between any end of the second region 330b in the length direction thereof and one end of the protection board 330 located at the same side. For example, there is a certain distance L between a left end of the second region 330b and a left end of the protection board 330, and the distance L is equal to the length of the first region 330a on the left side of the second region 330b.

Accordingly, there is a certain distance L between a right end of the second region 330b and a right end of the protection board 330, and the distance L is equal to the length of the first region 330a on the right side of the second region 330b.

In some other examples, the second region 330b may also be located at an edge region of the protection board 330 in the length direction.

For example, the second region 330b may be located at a left edge region of the protection board 330, and correspondingly, the first region 330a is located at a right edge region of the protection board 330, that is, the protection board 330 is sequentially divided into the second region 330b and the first region 330a in the length direction (referring to the direction indicated by x in FIG. 10). The left end of the second region 330b is flush with the left end of the protection board 330, that is, the distance L between the left end of the second region 330b and the left end of the protection board 330 is zero, and the distance L between the right end of the second region 330b and the right end of the protection board 330 is equal to the length of the first region 330a. It may be understood that the right end of the first region 330a is flush with the right end of the protection board 330.

For another example, the second region 330b may be located at the right edge region of the protection board 330, and correspondingly, the first region 330a is located at the left edge region of the protection board 330, that is, the protection board 330 is sequentially divided into the first region 330a and the second region 330b in the length direction (referring to the direction indicated by x in FIG. 10). The right end of the second region 330b is flush with the right end of the protection board 330, that is, the distance L between the left end of the second region 330b and the left end of the protection board 330 is equal to the length of the first region 330a. It may be understood that the left end of the first region 330a is flush with the left end of the protection board 330.

The position of the second region 330b is not limited in the embodiment of the present application, and may be specifically adjusted according to actual needs.

FIG. 11 is a partially enlarged view of B in FIG. 2. Referring to FIG. 2 and FIG. 11, the second region 330b of the protection board 330 and the protruding portion 341 are disposed in a staggered manner in the width direction of the battery cell body 310 (referring to the direction indicated by x in FIG. 11). That is, the projection of the second region 330b onto the battery cell body 310 in the y direction and the protruding portion 341 are disposed staggerly.

For example, the protruding portion 341 is located at the left end of the battery cell body 310 in the width direction, and the projection of the second region 330b of the protection board 330 onto the battery cell body 310 in the y direction is located on any region at the right side of the protruding portion 341, for example, a middle region of the top end face 311 of the battery cell body 310. Or, the protruding portion 341 is located at the right end of the battery cell body 310 in the width direction, and the projection of the second region 330b onto the battery cell body 310 in the y direction is located on any region at the left side of the protruding portion 341, for example, the middle region of the top end face 311 of the battery cell body 310.

Referring to FIG. 5 and FIG. 11, it may be understood that a recess 342 may be formed between the protruding portion 341 and the top sealing edge 343, and the recess 342 is located at a side of the protruding portion 341 in the width direction of the battery cell body 310, for example, in a middle region of a side of the top sealing edge 343 facing away from the top end face 311.

By staggering the second region 330b and the protruding portion 341 in the width direction of the battery cell body 310, the space of other regions on the top end face 311 other than the protruding portion 341 may be reasonably utilized. For example, the second region 330b may be disposed in the recess 342 formed at a side of the protruding portion 341, so as to prevent the second region 330b of the protection board 330 from additionally occupying the height space of the battery cell 300a, which increases the height of the battery. Therefore, the height size of the battery 300 is reduced, and thus the energy density of the battery cell 300a can be increased when it is placed. On the other hand, the distance between the second region 330b of the protection board 330 and the battery cell body 310 is reduced, thereby reducing the length of the tab 320 for electrically connecting the second region 330b with the battery cell 300a. So that the resistance and power consumption between the second region 330b of the protection board 330 and the battery cell body 310 are reduced, which is more beneficial to the charging and discharging of the battery 300 and the full utilization of battery power.

Referring to FIG. 2, the second region 330b of the protection board 330 is connected with the tab 320, for example, the electronic elements 3311 on the second region 330b are electrically connected with the tab 320, so that the electronic elements 3311 on the protection board 330 are electrically connected with the battery cell body 310.

With continued reference to FIG. 11, in some examples, the first region 330a may be disposed opposite to the protruding portion 341. That is, projections of the first region 330a and the protruding portion 341 in the y direction have an overlapping region. For example, a projection region of the first region 330a onto the battery cell body 310 in the y direction overlaps with a projection region of the protruding portion 341 onto the battery cell body 310.

Referring to FIG. 11, exemplarily, at least part of the first region 330a may be located on a side of the protruding portion 341 facing away from the battery cell body 310, so that a surface of the first region 330a may be fixed on the protruding portion 341, thereby improving the stability of the protection board 330 on the top end face 311 of the battery cell body 310, and ensuring the reliability of the electrical connection between the protection board 330 and the tab 320.

Generally, the electronic elements 3311 on the protection board 330, after being packaged, are connected to printed circuits on the protection board 330 by welding such as spot welding or tin soldering to achieve the functions of individual electronic elements 3311. Of course, in some possible examples, individual electronic elements 3311 may be connected to the circuits on the protection board 330, then packaged respectively. After packaging, the electronic elements 3311 may be protected. In addition, the electronic elements 3311 are isolated from each other, so that interference may be avoided.

However, after packaging individual electronic elements 3311 separately, each electronic element 3311 has a relatively large volume, and a space on the protection board 330, in which the electronic elements 3311 need to occupy, may be relatively increased. As such, an overall size of the protection board 330 needs to be larger to accommodate all the electronic elements 3311. The larger protection board of the battery 300 causes the wiring of the printed circuits on the protection board of the battery 300 to become longer, and the protection board 330 has high resistance and high power consumption, which is not beneficial to the charging and discharging of the battery 300 and the full utilization of the power of the battery 300.

Referring to FIG. 8 and FIG. 10, in view of this, the protection board 330 in the embodiment of the present application may further include an encapsulation layer 332, and the encapsulation layer 332 covers a plurality of electronic elements 3311. For example, after the electronic elements 3311 are connected with the circuits on the substrate 331, the electronic elements 3311 are covered by the encapsulation layer 332. As such, the encapsulation layer 332 forms an integral package for at least part of the electronic elements 3311 covered by the encapsulation layer 332, which can reduce the volume needed to be occupied for separately packaging individual electronic elements 3311. In other words, the size of the protection board 330 can be reduced, so that the wiring on the protection board 330 is shorter, the resistance and power consumption of the protection board 330 can be reduced, which is beneficial to the charging and discharging of the battery 300. In addition, when the battery 300 is discharged, the resistance of the protection board 330 is smaller, which is more beneficial to the full utilization of the power of the battery 300, and improves the utilization rate of energy.

Referring to FIG. 8 and FIG. 10, exemplarily, the electronic elements 3311 of the protection board 330 are all located on a surface of the substrate 331 (for example, the upper surface of the substrate 331 in FIG. 8), and the encapsulation layer 332 covers an outer surface of a module formed by all the electronic elements 3311. The electronic elements 3311 and the encapsulation layer 332 are located in the second region 330b of the protection board 330, that is, the substrate 331, the plurality of electronic elements 3311 located on the substrate 331 and the encapsulation layer 332 covering the electronic elements 3311 are included in the second region 330b of the protection board 330. Therefore, the height of the second region 330b may be a distance between the surface of the substrate 331 facing away from the electronic elements 3311 and a surface of the encapsulation layer 332 facing away from the electronic elements 3311, which may specifically refer to d2 in FIG. 10. The height of the first region 330a is the distance between the surfaces of the two sides of the substrate 331, which may specifically refer to d1 in FIG. 10.

Actually, the substrate 331 may be a PCB, and in some possible examples, the substrate 331 may also be an integrated circuit board. When the substrate 331 is a PCB, the substrate 331 may be a four-layer board, an eight-layer board, a twelve-layer board or a sixteen-layer. It is to be noted that in the embodiment of the present application, the number of layers of the substrate 331 is only exemplified as some specific examples, and is not the limiting to the specific number of layers of the substrate 331.

The plurality of electronic elements 3311 disposed on the substrate 331 may have different functions, for example, there is an electronic element 3311 on a charging protection circuit for protecting the charging process or an electronic element 3311 on a discharging circuit for protecting the discharging process, and there are electronic elements 3311 such as a flexible circuit, a control chip (IC), a field effect transistor (MOS) or some capacitors and resistors. Of course, there may also be electronic elements 3311 with other functions on the substrate 331, and it is not described in detail in this embodiment of the present application.

Referring to FIG. 10, in the embodiment of the present application, the plurality of electronic elements 3311 may be covered and packaged by a System In a Package (System In a Package, abbreviation, SIP). It is to be noted that since the electronic elements 3311 protrude from the surface of the substrate 331, the encapsulation layer 332 also protrudes from the surface of the substrate 331 when a plurality of electronic elements 3311 are covered and packaged.

It is to be noted that in the embodiment of the present application, the encapsulation layer 332 protrudes from one surface of the substrate 331. That is, in the embodiment of the present application, when the electronic elements 3311 on the substrate 331 are encapsulated by SIP, at least part of the electronic elements 3311 on one surface of the substrate 331 may be encapsulated, and then at least part of the electronic elements 3311 on the other surface of the substrate 331 may be encapsulated.

In some specific examples, the encapsulation layer 332 may be plastic sealant.

It may be understood that in some possible examples, the substrate 331 and the electronic elements 3311 on the substrate 331 may also be encapsulated together by SIP, that is, the entire substrate 331 and the electronic elements 3311 on the substrate 331 are covered and encapsulated by the encapsulation layer 332.

The plurality of electronic elements 3311 on the substrate 331 are integrally encapsulated by the encapsulation layer 332, that is, each of the plurality of electronic elements 3311 does not need to be separately encapsulated. In other words, packaging a plurality of electronic elements 3311 as a whole with the encapsulation layer 332 may save the space needed to be occupied by separately packaging of each electronic element 3311, reduce the space needed to be occupied by a plurality of electronic elements 3311 on the substrate 331, and also reduce the space needed to be occupied by the substrate 331, thus shortening the wiring length on the substrate 331. Compared with the prior art, the space needed to be occupied by the substrate 331 may be reduced, and the length of wiring on the substrate 331 may be shortened, so that the resistance of the protection board 330 may be effectively reduced, the power consumption of the protection board 330 may be reduced, the utilization rate of the power of the battery 300 may be improved, and the battery life of the battery 300 may be further improved.

In addition, the encapsulation layer 332 covers an area formed by a plurality of electronic elements 3311 to form a complete package, so that the encapsulation layer 332 covers the substrate 331, wholly, which may strengthen the substrate 331 to some extent, that is, the mechanical strength of the substrate 331 may be improved.

It may be understood that the encapsulation layer 332 covers the area where a plurality of electronic elements 3311 are formed, so that the encapsulation layer 332 may uniformly conduct heat generated by the electronic elements 3311. That is, the encapsulation layer 332 is used to cover and encapsulate a plurality of electronic elements 3311, so that the protection board 330 may have good heat uniformity. Of course, the interference resistance and corrosion resistance of the protection board 330 are improved to some extent.

It is to be noted that, generally, the electronic elements 3311 of the protection board 330 are connected to the surface of the substrate 331, that is, the electronic elements 3311 protrude relative to the surface of the substrate 331, in order to completely package the electronic elements 3311 and well protect the electronic elements 3311.

Referring to FIG. 10, in a specific arrangement, the height of the second region 330b protruding from the first region 330a may be 0.8 mm to 2.0 mm. For example, in the corresponding example of FIG. 10, that is, a plurality of electronic elements 3311 and the encapsulation layer 332 are located on one surface of the substrate 331, and the electronic elements 3311 and the encapsulation layer 332 are located in the second region 330b of the protection board 330, the height of the encapsulation layer 332 protruding from the substrate 331 is 0.8 mm to 2.0 mm.

For example, the height of the second region 330b protruding from the first region 330a may be an appropriate value such as 0.8 mm, 1.2 mm, 1.6mm or 2.0 mm, which may be adjusted according to the actual situation.

Here, the height of the second region 330b protruding from the first region 330a may be the height of the second region 330b protruding from the first region 330a in the height direction of the protection board 330 (referring to the direction indicated by y in FIG. 10). That is, the height of the encapsulation layer 332 protruding from the substrate 331 may be between 0.8 and 2.0 mm, so that the electronic elements 3311 on the substrate 331 (specifically, referring to electronic elements 3311 having the highest height) may be completely covered and encapsulated, which may well protect the electronic elements 3311.

The height d1 of the first region 330a may be 0.6 mm to 1.5 mm, for example, in an optional example of the present application, the thickness of the substrate 331 is 0.6 mm to 1.5 mm, as such, it can be ensured that the substrate 331 has sufficient mechanical strength. It may be understood that the substrate 331 may be a four-layer board, an eight-layer board or the like as described in detail in the foregoing embodiments. In some specific examples, the number of layers of the substrate 331 may be selected according to actual needs. Of course, the thickness of the substrate 331 may also change correspondingly. For example, when the substrate 331 is an eight-layer board, the thickness of the substrate 331 is 1.2 mm, and when the substrate 331 is a six-layer board, the thickness of the substrate 331 is 1.0 mm, etc.

Referring to FIG. 10, a height d2 of the second region 330b may be 1.4 mm to 3.5 mm. For example, in an optional example of the present application, a distance between the lower surface of the substrate 331 and a surface of the encapsulation layer 332 facing away from the substrate 331 may be 1.4 mm to 3.5 mm, so as to avoid the second region 330b from being too high to occupy a too large size of the battery 300 in the height direction, thereby ensuring the capacity of the battery cell 300a. Exemplarily, the height d2 of the second region 330b may be an appropriate value such as 1.4 mm, 2 mm, 2.5 mm, 3mm or 3.5 mm, etc., and it may be specifically adjusted according to the actual situation.

It is to be noted here that the numerical values and numerical ranges involved in the embodiments of the present application are approximate values, and there may be a certain range of errors due to the influence of the manufacturing process, which may be ignored by those of skill in the art.

With continued reference to FIG. 10, in the embodiment of the present application, the length of the first region 330a may be 2 mm to 15 mm. Exemplarily, when the second region 330b is located in the middle region of the protection board 330, there are first regions 330a on both sides of the second region 330b in the length direction of the the second region 330b, and the lengths of the first regions 330a may be understood as distances by which the second regions 330b are indented relative to both ends of the protection board 330.

For example, the length L between the left end of the second region 330b in the x direction and the left end of the protection board 330 may be 2 mm to 15 mm, that is, the length L of the first region 330a on the left side of the second region 330b in the x direction is 2 mm to 15 mm; or, the length L between the right end of the second region 330b in the x direction and the right end of the protection board 330 may be 2 mm to 15 mm, that is, the length L of the first region 330a on the right side of the second region 330b in the x direction may be 2 mm to 15 mm.

It may be understood that in the above example, both ends of the encapsulation layer 332 in the length direction are indented between both ends of the substrate 331 in the length direction of the substrate 331. It is to be noted that the length direction of the encapsulation layer 332 may specifically refer to the x direction in FIG. 10, a situation, in which both ends of the encapsulation layer 332 in the length direction of the encapsulation layer 332 are indented relative to both ends of the substrate 331 in the length direction of the substrate 331, means that the overall length of the encapsulation layer 332 is less than that of the substrate 331, and in addition, neither of the both ends of the encapsulation layer 332 is flush with either end of the substrate 331. In other words, referring to FIG. 10, after the electronic elements 3311 on the substrate 331 are encapsulated by SIP, the encapsulation layer 332 and the surfaces of the electronic elements 3311 on the substrate 331 within the encapsulation layer 332 form a boss-like structure (e.g., the upper surface in FIG. 10), that is, the whole shape of the encapsulated protection board 330 presents a convex shape.

As such, when the protection board 330 is installed and connected with the battery cell 300a of the battery 300, it can be ensured that the convex second region 330b is disposed in a staggered manner with the protruding portion 341, so that the second region 330b may be disposed in the recess at a side of the protruding portion 341 in the x direction, which is beneficial to reducing the space needed to occupied by the protection board 330 and improving the capacity of the battery 300.

In the above example, the lengths of the two first regions 330a may be appropriate values such as 2 mm, 5 mm, 8 mm, 12mm or 15 mm, etc., for example, the distance L by which each end of the encapsulation layer 332 is indented in the length direction may be 2 mm, 5 mm, 8 mm, 12mm or 15 mm, etc.

It is to be noted that the distances by which both ends of the encapsulation layer 332 are indented in the length direction thereof may be the same, for example, both ends of the encapsulation layer 332 are indented by 2 mm, 5 mm, etc. Of course, both ends of the encapsulation layer 332 in the length direction may also be indented by different distances. For example, referring to FIG. 10, the indenting distance of the left end of the encapsulation layer 332 may be 5 mm, and the indenting distance of the right end of the encapsulation layer 332 may be 10 mm. Specifically, it may be selected according to the distribution of electronic elements 3311.

Of course, in other examples, when there is only one protruding portion 341, one end of the second region 330b may be extended to be flush with one end of the protection board 330, and the first region 330a is located between the other end of the second region 330b and the other end of the protection board 330, and the length of the first region 330a is 2 mm to 15 mm, that is, the other end of the second region 330b is indented by 2 mm to 15 mm relative to the other end of the protection board 330.

For example, referring to FIG. 11, the protruding portion 341 is located at the left end of the top end face 311, and part region at the right end of the protection board 330 may be used as the second region 330b, correspondingly, a portion at the left side of the second region 330b is the first region 330a, and the length L of the first region 330a may be 2 mm to 15 mm, that is, the distance between the left end of the second region 330b and the left end of the protection board 330 is 2 mm to 15 mm. In other words, one end of the second region 330b is indented by 2 mm to 15 mm relative to one end of the protection board 330, so as to ensure that the second region 330b and the protruding portion 341 at the left end are disposed in a staggered manner, so that the second region 330b is completely located in the recess 342 at the right side of the protruding portion 341, which is beneficial to reducing the space needed to be occupied by the protection board 330 and improving the capacity of the battery 300.

For example, a distance by which one end of the encapsulation layer 332 is indented is 2 mm to 15 mm. For example, a distance by which one end of the encapsulation layer 332 is indented may be an appropriate value such as 2 mm, 5 mm, 8 mm, 12mm or 15mm, etc.

Referring to FIG. 2, when there are two protruding portions 341, the second region 330b is located in the middle region of the protection board 330, that is, both ends of the second region 330b are indented relative to both ends of the protection board 330 in the length direction, where the first regions 330a are located on both sides of the second region 330b in the length direction, respectively.

For example, referring to FIG. 2 and FIG. 11, the battery 300 is formed with a recess 342 between the two protruding portions 341, the recess 342 is enclosed by two protruding portions 341 and the top sealing edge 343, and the second region 330b of the protection board 330 is located in the recess 342, that is, the encapsulation layer 332 protruding from the protection board 330 is located between the two protruding portions 341.

That is, in the embodiment of the present application, when the protection board 330 is installed and fixed, the convex second region 330b of the protection board 330 is located in the recess 342 between the two protruding portions 341, as such, the space needed to be occupied by the protection board 330 can be reduced. That is, under the condition that the electronic device 10 provides the same installation space position, the volume of the battery cell body 310 of the battery 300a can be increased, thereby improving the capacity of the battery cell 300a and improving the battery life of the electronic device 10.

With continued reference to FIG. 2 and FIG. 11, the two first regions 330a of the protection board 330 are respectively disposed opposite to the two protruding portion 341, for example, at least parts of both ends of the substrate 331 are disposed opposite to the two protruding portions 341, as such, when the protection board 330 is installed, both ends of the first regions 330a, for example, both ends of the substrate 331, may be connected with the two protruding portions 341 respectively.

For example, referring to FIG. 2, a left end of the substrate 331 is connected with a protruding portion 341 on the left side, and a right end of the substrate 331 is connected with a protruding portion 341 on the right side, that is, the first region 330a on the left side is connected with the protruding portion 341 on the left side, and the first region 330a on the right side is connected with the protruding portion 341 on the right side, thereby improving the stability of the assembly of the protection board 330 on the top end face 311 of the battery cell body 310.

In some optional examples, the first region 330a of the protection board 330 and the protruding portion 341 may be connected by a first insulation layer (not shown in the drawings).

Specifically, in the embodiment of the present application, the first insulation layer may be formed on the protruding portions 341 by dispensing with glues between each of both ends of the substrate 331 of the protection board 330 and the protruding portion 341, and the protection board 330 is stuck/bonded on the protruding portion 341 through the first insulation layer. As such, this can be convenient to fix the protection board 330.

In addition, the protection board 330 and the protruding portion 341 are connected by the first insulation layer, so that the short circuit can be avoided, and the protruding portion 341 of the aluminum-plastic film can be protected, the leakage of the battery 300 is avoided, and the use safety of the battery 300 is improved.

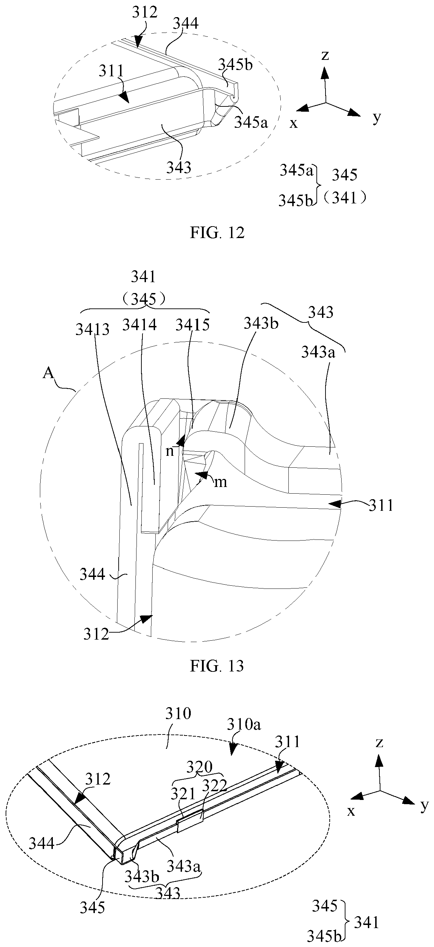

FIG. 12 is a partially enlarged view of a protruding portion of a case in a battery provided in an embodiment of the present application, FIG. 13 is another partially enlarged view of a protruding portion of a case in a battery provided in an embodiment of the present application, and FIG. 14 is yet another partially enlarged view of a protruding portion of a case in a battery provided in an embodiment of the present application.

Referring to FIG. 6 and FIG. 12 to FIG. 14, the protruding portion 341 of the embodiments of the present application may have various structures.

Referring to FIG. 6, FIG. 12 and FIG. 13, as an example, the protruding portion 341 may be formed by bending portions, extending beyond the top end face 311, of the top sealing edge 343 and the side sealing edge 344 of the case 340.

Referring to FIG. 12, for the convenience of description, the portions, extending beyond the top end face 311, of the the top sealing edge 343 and the side sealing edge 344 of the case may be used as extension portions 345, where the portion of the top sealing edge 343 of the case extending beyond the top end face 311 is used as a first extension portion 345a, and the porition of the side sealing edge 344 of the case extending beyond the top end face 311 is used as a second extension portion 345b.

Referring to FIG. 11 to FIG. 13, the protruding portion 341 may be bent in various methods. Referring to FIG. 12, as a first bending method, the first extension portion 345a may be folded and attached on a surface of the second extension portion 345b facing the top end face 311, so that the first extension portion 345a and the second extension portion 345b that are attached on each other form the protruding portion 341.

Referring to FIG. 6, as a second bending method, the protruding portion 341 may include a first bending section 3411 and a second bending section 3412, the first bending section 3411 is located between the second bending section 3412 and the top sealing edge 343. For example, in some examples, the first bending section 3411 may be attached on the top sealing edge 343, and the second bending section 3412 may be parallel to the top sealing edge 343.

In a specific arrangement, ends of the first extension portion 345a and the second extension portion 345b attached on each other in FIG. 12 may be wound 180 degrees towards a direction of the battery cell body 310. Specifically, the winding direction of the ends of the first extension portion 345a and the second extension portion 345b may be wound directed to the inside of the side sealing edge 344 (for example, in the negative direction as shown by the z axis in FIG. 12), thus forming the first bending section 3411. Specifically, the first bending section 3411 may be wound from the ends of the first extension portion 345a and the second extension portion 345b toward/near the battery cell 300a at a distance of 0.2 mm to 1.0 mm, in other words, a length of the first bending section 3411 may be 0.2 mm to 1.0 mm, for example, may be 0.5 mm, 0.7mm or 1.0 mm, etc.

It may be understood that by winding the ends of the first extension portion 345a and the second extension portion 345b, the ends of the first extension portion 345a and the second extension portion 345b, after being wound, face the battery cell body 310 without being exposed to the outside, which can avoid the corrosion of the cross section of the aluminum-plastic film, and can improve the battery life of the battery 300.

In addition, after the first bending section 3411 is wound, the remaining protruding portions at the ends of the first extension portion 345a and the second extension portion 345b are wound/bent by 90 degrees in the same direction as described above. That is, the remaining portions of the first extension portion 345a and the second extension portion 345b extending beyond the top end face 311 are bent by 90 degrees in the z axis direction in FIG. 12, thereby forming a second bending section 3412 parallel or approximately parallel to the top sealing edge 343, where the first bending section 3411 is located between the second bending section 3412 and the top sealing edge 343.

It may be understood that, in order to avoid the bent first bending section 3411 from recovering or becoming warped, the first bending section 3411, after being wound/bent, may be fixed by dispensing with glues or sticking an insulating tape on an inner side of the first bending section 3411. Of course, after the second bending section 3412 is bent, an inner side of the second bending section 3412 (that is, a side of the second bending section 3412 toward/facing the top sealing edge 343) may also be fixed by dispensing with glues or sticking an insulating tape.

As such, after the corresponding protruding portion 341 in FIG. 12 is bent and wound, the corresponding protruding portion 341 in FIG. 6 is formed, so that the length of the protruding portion 341 protruding from the top end face 311 is shortened, and the space occupied by the protruding portion 341 can be reduced, that is, under the condition that the electronic device 10 provides the same installation space position, the battery 300 may achieve a larger volume, and the volume of the battery cell body 310 can be increased, thereby improving the capacity of the battery 300a, and improving the battery life of the electronic device 10.

Referring to FIG. 13, as a third bending method, referring to FIG. 13, sharp corners of the first extension portion 345a and the second extension portion 345b at their corners may be folded first, that is, part of the first extension portion 345a and part of the second extension portion 345b may be bent first, for example, by 180 degrees, and then a side of the top sealing edge 343 toward/facing the battery cell body 310 may be folded, for example, by 90 degrees, so that the top sealing edge 343 is parallel or approximately parallel to the top end face 311 of the battery cell body 310, and then the side sealing edge 344 is bent towards the direction of the battery cell body 310 by approximately 90 degrees, so that the corresponding structure in FIG. 13 may be obtained. After the sharp corners of the first extension portion 345a and the second extension portion 345b at their corners are folded, the sharp corners may be stuck and fixed by dispersing with glues on inner surfaces of the sharp corners.

Referring to FIG. 13, the protruding portion 341 formed by the third bending method may include a first portion 3413, a second portion 3414 and a third portion 3415, the first portion 3413 is connected with the side sealing edge 344, the second portion 3414 is connected with the first portion 3413 and bent towards the top end face 311, and the third portion 3415 is located on a side of the second portion 3414 facing away from the first portion 3413, and is connected with the top sealing edge 343.

It may be understood that the first portion 3413 and the second portion 3414 are two portions of the second extension portion 345b, respectively, and the second portion 3414 is a portion, bent towards the top end face 311, of the second extension portion 345. The second portion 3414 may be attached on a side of the first portion 3413 facing the top end face 311.

In addition, the third portion 3415 is the first extension portion 345a, where the third portion 3415 is bent towards the top end face 311.

The top sealing edge 343 may include a main body portion 343a and end portions 343b located at both ends of the main body portion 343a in the length direction, and the end portions 343b are connected with the second portion 3414.

Referring to FIG. 13, a portion of the top sealing edge 343 close to the second portion 3414, for example, the end portion 343b, may be bent away from the top end face 311, so that when at least part of the top sealing edge 343, for example, the main body portion 343a, is bent to be parallel or approximately parallel to the top end face 311, the end portion 343b can be transited smoothly to be connected with the second portion 3414, thereby preventing the end portion 343b and the third portion 3415 from being damaged due to excessive bending.

Referring to FIG. 13, for example, the third portion 3415 may include two portions, where one portion (shown by m in FIG. 13) is disposed opposite to the second portion 3414, and the other portion (shown by n in FIG. 13) is connected with the side of the second portion 3414 facing away from the end face.

Referring to FIG. 14, as another example, the protruding portion 341 may be formed by the first extending portion 345a, the second extending portion 345b and the end portion 343b of the top sealing edge 343 after the main body portion 343a of the top sealing edge 343 and the side sealing edge 344 are bent by 90 degrees towards the battery cell body 310.

For example, when the top sealing edge 343 is folded, only the main body portion 343a of the top sealing edge 343 may be folded so that the main body portion 343a is parallel or approximately parallel to the top end face 311, and the end portions 343b located at both ends of the main body portion 343a are not folded so that the end portions 343b are perpendicular to the top end face 311, that is, outer end faces of the end portions 343b are disposed to face away from the top end face 311, and then the side sealing edge 343 may be folded according to the method as described above, so that the extension portion 345 (including the first extension portion 345 and the second extension portion 345) is perpendicular to the top end face 311, that is, the extension portion 345 is perpendicular to the end portion 343b, thereby forming the protruding portion 341 shown in FIG. 14.

Referring to FIG. 14, there may be a transition section B between the main body portion 343a and the end portion 343b of the top sealing edge 343, and the transition section B is a bending section formed when the main body portion 343a is bent towards the top end face 311. It may be understood that an included angle between the transition section B and the top end face 311 is an acute angle.

Referring to FIG. 2 and FIG. 11, in some examples, the encapsulation layer 332 may face the top sealing edge 343 of the case 340, that is, the protrusion formed by the encapsulation layer 332 on the protection board 330 of the battery faces the top sealing edge 343. The first region 330a of the protection board covers the protruding portion 341, and the second region 330b and the protruding portion 341 are disposed in a staggered manner in the width direction of the battery cell (referring to the direction indicated by x in FIG. 11), that is, the second region 330b is disposed opposite to the top sealing edge 343 at the side of the protruding portion 341.

In a situation that the protection board has two first regions 330a and a second region 330b located between the two first regions 330a for an example, the first region 330a at the left end of the protection board 330 covers a side, facing away from the battery cell body 310, of the protruding portion 341 at the left end of the top sealing edge 343, and the first region 330a at the right end of the protection board 330 covers a side, facing away from the battery cell body 310, of the protruding portion 341 at the right end of the top sealing edge 343.

Referring to FIG. 11, exemplarily, when the protruding portion 341 is formed by the second bending method, the first region 330a covers the second bending section of the protruding portion 341. For example, at least part of the substrate at the left end covers a side, facing away from the battery cell body 310, of the second bending section at the left end, and at least part of the substrate at the right end covers a side, facing away from the battery cell body 310, of the second bending section at the right end.

It may be understood that in this example, the first bending section 3411 is attached on the top sealing edge 343, and the second bending section 3412 is located on a side of the first bending section 3411 facing away from the top sealing edge 343.

In addition, when the protruding portion 341 is formed by the third bending method, the first region 330a covers the first portion 3413, the second portion 3414 and the third portion 3415 of the protruding portion 341.

In some examples, the first region 330a of the protection board may abut against the protruding portion 341. For example, at least part of the end of the substrate may abut against the side of the protruding portion 341 (e.g., the second bending section) facing away from the top sealing edge 343. It may be understood that in this example, the first insulation layer is located between the first region 330a and the second bending section.

Referring to FIG. 11, in this example, a height of the protruding portion 341 may be less than or equal to a height of the second region 330b protruding from the first region 330a. It may be understood that the height of the second region 330b protruding from the first region 330a refers to a difference between the heights of the second region 330b and the first region 330a, which is the value of d2 minus d1 (referring to FIG. 10). For example, the height of the second region 330b protruding from the first region 330a may be a distance between a side of the encapsulation layer 332 facing away from the substrate 331 and the substrate 331.

It may be understood that when the height of the protruding portion 341 is equal to the height of the second region 330b protruding from the first region 330a, the encapsulation layer 332 of the second region 330b may abut against the top sealing edge 343 at the side of the protruding portion 341, and at least part of the first region 330a abuts against the protruding portion 341. As such, on the one hand, the assembly stability between the protection board 330 and the battery cell 300a can be improved; and on the other hand, the size of the battery 300 formed by assembling the protection board 330 and the battery cell 300a can be reduced, so that in a specific arrangement, the capacity of the battery cell body 310 can be increased and the battery life of the battery 300 can be improved.

When the height of the protruding portion 341 is smaller than the height of the second region 330b protruding from the first region 330a, the encapsulation layer 332 of the second region 330b may abut against the top sealing edge 343 at the side of the protruding portion 341, and the first region 330a covers the protruding portion 341, which may avoid the situation that the protruding portion 341 is too high to push up the protection board 330, resulting in an excessive distance between the protection board 330 and the battery cell body 310, thereby reducing the length size of the battery 300. Therefore, in a specific arrangement, the capacity of the battery cell body 310 can be increased and the battery life of the battery 300 can be improved. It may be understood that in this example, there is a gap between the first region 330a and the protruding portion 341, and a first insulation layer may be filled in the gap to connect and electrically isolate the first region 330a and the protruding portion 341.

It is to be noted that in other examples, the encapsulation layer 332 may be disposed facing away from the top sealing edge 343 of the case 340, that is, the protrusion formed by the encapsulation layer 332 on the protection board 330 faces away from the top sealing edge 343, and a side of the protection board 330 having no encapsulation layer 332 may be attached on the top sealing edge 343.

In this example, the protruding portion 341 may be bent and disposed on the side, facing away from the top sealing edge 343, of the first region 330a of the protection board. For example, when the protruding portion 341 is formed by the second bending method, the first bending section 3411 is bent and disposed on the side, facing away from the top sealing edge 343, of the first region 330a of the protection board. For example, the first bending section 3411 is attached on a side of the first region 330a facing away from the top sealing edge 343, and the second bending section 3412 is located on a side of the first bending section 3411 facing away from the protection board 330.

For example, the first bending section 3411 of the protruding portion 341 at the left side is attached on a side, facing away from the top sealing edge 343, of the first region 330a at the left end of the protection board (for example, the left end of the substrate), and the second bending section 3412 of the protruding portion 341 at the left side is located on a side of the first bending section 3411 facing away from the first region 330a at the left end of the protection board. The first bending section 3411 of the protruding portion 341 at the right side is attached on a side, facing away from the top sealing edge 343, of the first region 330a at the right end of the protection board (for example, the right end of the substrate), and the second bending section 3412 of the protruding portion 341 at the right side is located on a side of the first bending section 3411 facing away from the first region 330a at the right end of the protection board.

In this example, the height of the part of the protruding portion 341 on the side of the first region 330a facing away from the top sealing edge 343 may be less than or equal to the height of the second region 330b protruding from the first region 330a, so that the end of the protruding portion 341 facing away from the battery cell body 310 may be flush with or lower than the side of the second region 330b facing away from the top sealing edge 343.

For example, the height of a portion of the protruding portion 341 on the side of the first region 330a facing away from the top sealing edge 343 may be less than or equal to a distance between the encapsulation layer 332 and the substrate 331, so as to ensure that the end of the protruding portion 341 facing away from the battery cell body 310 is flush with or lower than the encapsulation layer 332, thereby preventing the protruding portion 341 from protruding from the side of the first region 330a facing away from the top end face 311 to occupy a certain height space, thus reducing the length size of the battery 300. As such, in a specific arrangement, the capacity of the battery cell body 310 may be increased, and the battery life of the battery 300 may be improved.

It may be understood that in this example, the first insulation layer is located between the first region 330a and the first bending section. In addition, in this example, the height of the protruding portion 341 may be less than or equal to the height of the second region 330b protruding from the first region 330a. For example, the end of the protruding portion 341 facing away from the battery cell body 310 may be flush with or lower than a surface of the encapsulation layer on a side facing away from the substrate, as such, it may be avoided that the protruding portion 341 extends beyond the second region 330b of the protection board to additionally occupy the height space of the battery, which may save a certain space for the increase of the battery, increas the capacity of the battery and prolong the battery life of the battery.

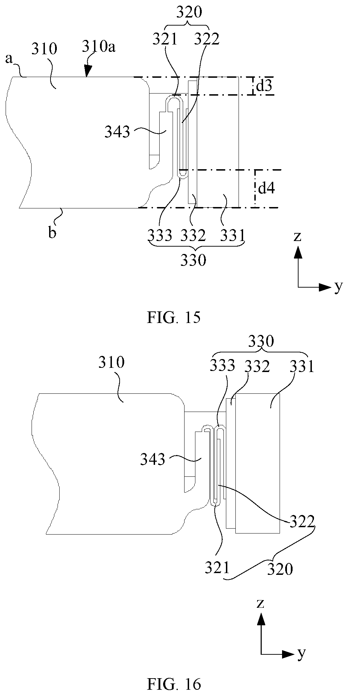

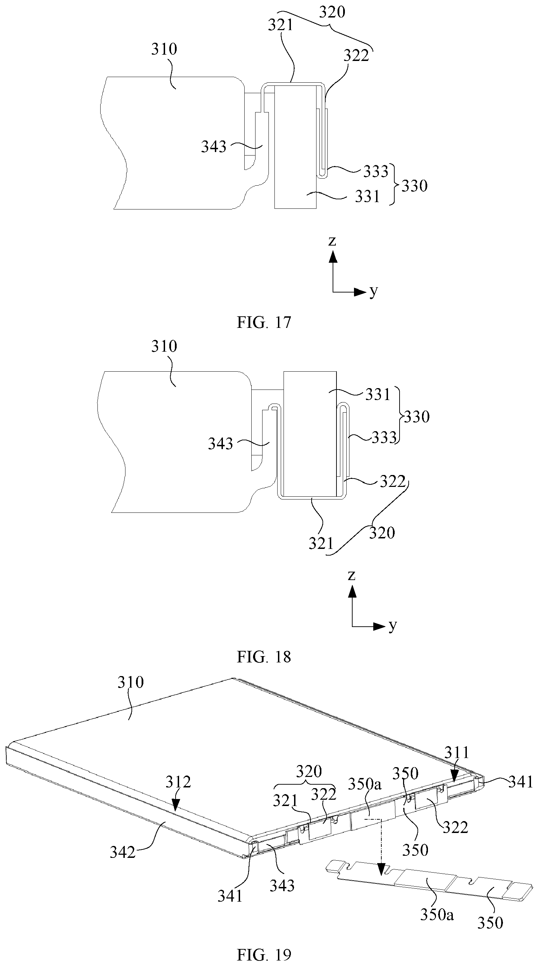

FIG. 15 is a schematic structural diagram of a connection between a protection board and a tab in a battery provided in an embodiment of the present application, FIG. 16 is another schematic structural diagram of a connection between a protection board and a tab in a battery provided in an embodiment of the present application, FIG. 17 is yet another schematic structural diagram of a connection between a protection board and a tab in a battery provided in an embodiment of the present application, and FIG. 18 is still another schematic structural diagram of a connection between a protection board 330 and a tab in a battery provided in an embodiment of the present application.

As described in detail in the previous embodiment, in the embodiment of the present application, the protection board 330 is electrically connected with the battery cell body 310 through the tab 320. In order to reduce the space occupied by the protection board 330 in the length direction of the battery cell 300a (that is, the height direction, referring to the direction indicated by y in FIG. 15), a plate surface of the protection board 330 is disposed to be parallel or approximately parallel to the end face of the battery cell 300a (for example, the top end face 311 described in the previous embodiments). As such, the tab 320 needs to be bent, so that at least part of the tab is attached on the nickel sheet 333 in the second region 330b of the protection board to stabilize the welding.

Referring to FIG. 15 to FIG. 18, in an optional example of the present application, the tab 320 includes a first connection section 321 and a second connection section 322, the second connection section 322 is connected with the battery cell body 310 through the first connection section 321, at least part of the connection section 321 is located in the top sealing edge 343, and the second connection section 322 is used to be connected with the protection board 330.

It may be understood that with the bending of the top sealing edge 343, at least part of the first connection section 321 may be parallel or approximately parallel to the top end face 311 of the battery cell body 310. In addition, an extension direction of the second connection section 322 is consistent with a thickness direction of the battery cell, that is, the second connection section 322 is parallel to the plate surface of the protection board 330, and is welded with the nickel sheet 333 in the second region 330b of the protection board 330 to achieve the electrical connection between the tab and the protection board 330.

Specifically, in the embodiment of the present application, after the top sealing edge 343 and the side sealing edge 344 are folded, the remaining parts of the positive and negative electrode tabs 320 (for example, part of the first connection section 321 and the second connection section 322) may be bent. For example, the remaining parts of the positive and negative electrode tabs 320 are bent by 90 degrees so that extending directions of the positive and negative electrode tabs 320 are consistent with the length direction of the battery cell 300a, and then the positive and negative electrode tabs 320 may be clipped, so as to ensure that the tabs 320 with an appropriate length are connected with the nickel sheet 333 on the protection board 330, and at least parts of the positive and negative electrode tabs 320 are attached with the nickel sheet 333 on the protection board 330, and then the welding is performed.

After the connection with the nickel sheet 333 of the protection board 330, the protection board 330 is folded to be parallel or approximately parallel to the top end face 311 of the battery cell 300a, so that at least parts of the positive and negative electrode tabs 320 and the nickel sheet 333 are parallel to the plate surface of the protection board 330. Specifically, the second connection section 322 of each of the positive and negative electrode tabs 320 is a portion connected with the nickel sheet 333 on the protection board.

Referring to FIG. 15 and FIG. 16, after the protection board 330 is installed on the top end face 311 of the battery cell 300a, the joint between the tab 320 and the protection board 330 (for example, the encapsulation layer 332 of the second region 330b) may be directed to/face one side of the battery cell body 310; and according to the specific length of the tab 320, it may be folded according to the two methods referring to FIG. 15 and FIG. 16, respectively. For example, the tab 320 in FIG. 15 is folded once, or the tab 320 in FIG. 16 is folded twice.

In some other examples, referring to FIG. 17 and FIG. 18, after the protection board 330 is installed on the top end face 311 of the battery cell 300a, the joint between the tab 320 and the protection board 330 (for example, the encapsulation layer 332 of the second region 330b) may face away from/deviated from one side of the battery cell 300a; and according to a specific length of the tab 320, it may be folded in two ways in FIG. 17 and FIG. 18 respectively. For example, the tab 320 in FIG. 17 is folded twice, or the tab 320 in FIG. 18 is folded three times.

It is to be noted that when the tab 320 is folded, the bending point of the tab 320 is indented relative to the surface of the battery cell body 310, that is, a projection of the tab 320 onto a plane where the top end face 311 is located is located winin the top end face 311. As such, the bent portion of the tab 320 may not protrude from the battery cell 300a, which can prevent the tab 320 from being damaged by the battery 300 during transportation. In addition, it can also avoid that the tab 320 additionally occupies the space of the battery cell 300a in a thickness direction, so that a certain space may be saved for the increase of the battery cell body 310, the capacity of the battery cell body 310 is incrased, and the battery life of the battery cell 300 is prolonged.

It is to be noted that the surface of the battery cell body 310 refers to either of the two surfaces of the battery cell body 310 that are opposite in the thickness direction. Referring to FIG. 15, for convenience of description, the battery cell body 310 may include a first surface a and a second surface b that are opposite to each other in the thickness direction (referring to the z direction in FIG. 15), and the top sealing edge 343 is bent towards the first surface a. The tab 320 is located at one side of the top end face 311 between the first surface a and the second surface b.

For example, in the thickness direction of the battery cell 300a, the first connection section 321 is located at an inner side of the surface of the battery cell body 310, and the distance between the first connection section 321 and the surface of the battery cell 300a is greater than or equal to 0.2 mm. As such, sufficient safety space can be provided for the tab 320, and the tab 320 can be effectively protected from being damaged.

For example, a distance (referring to d3 in FIG. 15) between a side of the first connection section 321 near the first surface a and the first surface a is greater than or equal to 0.2mm. For example, d3 may be an appropriate value such as 0.2 mm, 0.3mm or 0.4 mm, etc., and it may be specifically adjusted according to the actual situation.

Or, a distance (referring to d4 in FIG. 15) between a side of the first connection section 321 near the second surface b and the second surface b is greater than or equal to 0.2 mm, for example, d4 may be an appropriate value such as 0.2 mm, 0.3mm or 0.4 mm, etc., and it may be specifically adjusted according to the actual situation.

Referring to FIG. 15 to FIG. 18, in addition, the projection of the protection board 330 onto the battery cell body 310 may be located within the top end face 311, in other words, both ends of the protection board 330 in the width direction may be flush with or lower than the surface of the battery cell body 310. On the one hand, it can prevent the protection board 330 from being damaged by the battery 300 during transportation, and on the other hand, it can be avoided that the protection board 330 additionally occupies the space of the battery cell 300a in the thickness direction, so that a certain space may be saved for the increase of the battery cell body 310 of the battery cell 300a, the capacity of the battery cell 300a is increased, and the battery life of the battery may be prolonged.

FIG. 19 is another schematic structural diagram of the matching between a battery cell and a case in a battery provided in an embodiment of the present application.

Referring to FIG. 19, a side of the top sealing edge 343 facing away from the battery cell body 310 is provided with a second insulation layer 350, and at least the second region 330b of the protection board 330 is attached on the second insulation layer 350, so that the protection board 330 is electrically insulated from the top sealing edge 343.

With continued reference to FIG. 19, for example, the second connection section 322 is located between the protection board 330 and the battery cell body 310, and the second insulation layer 350 is provided between the second connection section 322 and the top sealing edge 343, at least part of the second connection section 322 may be attached on an outer surface of the top sealing edge 343 through the second insulation layer 350, and at least the second region 330b in the protection board 330 is attached on the second insulation layer 350. The outer surface of the top sealing edge 343 refers to a surface of the top sealing edge 343 on a side facing away from the battery cell 300a.

The second insulation layer 350 may be an insulating tape to improve the stability of the protection board 330 on the top end face 311, thereby ensuring the stability of the electrical connection between the protection board 330 and the tab 320.

The adhesive tape material of the insulating tape may be DuPont paper, polyimide (Polyimide, abbreviation, PI) film, polyethylene terephthalate (Polyethylene terephthalate, abbreviation, PET) film and other films with an insulating property. In addition, the material of the double-sided backing adhesive of the insulating tape may include but not limited to pressure-sensitive adhesive or heat-sensitive adhesive such as acrylic adhesive, silica gel, hot melt adhesive, etc., and it may be specifically selected according to actual needs.

Referring to FIG. 19, since the second region 330b of the protection board 330 protrudes from the first region 330a, the packaged surface of the protection board 330 is uneven. In some examples, a side of the second insulation layer 350 facing the protection board 330 may have a compressible medium 350a (not shown in the drawings), and the second region 330b of the protection board 330 is attached on the compressible medium 350a. For example, when the encapsulation layer 332 of the protection board 330 faces the battery cell body 310, the protruding second region 330b (for example, the encapsulation layer) in the protection board 330 may be attached on the compressible medium 350a, as such, the encapsulation layer 332 of the protection board 330 may be tightly attached on the top sealing edge 343 under the elastic pre-tightening force of the compressible medium 350a, thereby improving the stability of the electrical connection between the tab 320 and the protection board 330.

Specifically, the compressible medium 350a may be a compressible foam tape, such as a single-sided compressible foam tape or a double-sided compressible foam tape.

In some possible examples, the second insulation layer 350 may also be formed on the outer surface of the top sealing edge 343 by dispensing with glues.

By disposing the second insulation layer 350 between the outer surface of the top sealing edge 343 and the protection board 330, it can short circuit from occurring between other electronic elements of the protection board 330 and the tab 320. In addition, an insulating tape is used as the second insulation layer 350 to connect the outer surface of the top sealing edge 343 with the second connection section 322, and the outer surface of the top sealing edge 343 with the protection board 330. Therefore, this can avoid the deformation of the folded second connection section 322, and can make the tab 320 better fixed, and in addition, this also plays a role of fixing the protection board 330, so that the protection board 330 may be stably adhered on the top sealing edge 343 on one side of the battery cell 300a.

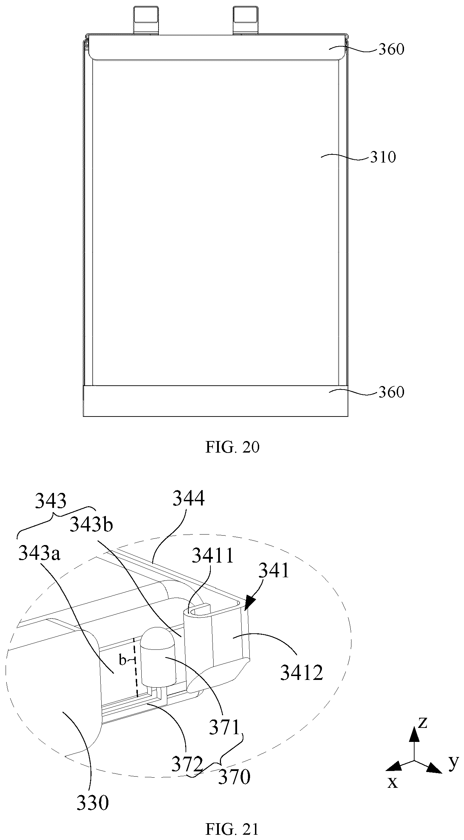

FIG. 20 is another schematic structural diagram of a battery provided in an embodiment of the present application.

Referring to FIG. 20, in other optional examples of the present application, a third insulation layer 360 is attached on the side of the protection board 330 facing away from the battery cell body 310, at least part of the third insulation layer 360 covers the protection board 330, and another part of the third insulation layer 360 is connected with the battery cell body to fix the protection board 330.

In addition, the arrangement of the third insulation layer 360 effectively insulates the protection board 330 from external electronic elements.

Specifically, in the embodiment of the present application, the third insulation layer 360 may be an insulating tape, that is, after the mating and installation of the protection board 330 and the battery cell 300a is finished, the surface of the protection board 330 on the side facing away from the battery cell body 310 is protected by attaching the insulating tape. It may be understood that the adhesive tape material and gum material of the third insulation layer 360 may be the same as those of the second insulation layer 350, which is not described in detail here.

FIG. 21 is a partial schematic view of C in FIG. 2. Referring to FIG. 21, in order to ensure the performance of the battery 300 and the safety of charging and discharging of the battery 300, in an optional example of the present application, a temperature sensor 370 is disposed in the battery 300, and the temperature sensor 370 is electrically connected with the protection board 330. Specifically, the temperature sensor 370 is electrically connected with electronic elements such as a control element in the second region 330b of the protection board 330, so as to achieve signal transmission between the protection board 330 and the temperature sensor 370.

During the charging and discharging process of the battery 300, the temperature sensor 370 detects an internal temperature of the battery 300 and transmits a detected temperature signal to the control element on the circuit protection board 330. The control element adjusts the charging process according to the temperature signal detected by the temperature sensor 370, for example, it limits the charging current or the charging voltage, so as to control and compensate for the temperature of the battery 300 during the charging and discharging process.

As such, the temperature of the battery 300 during the charging and discharging may be monitored to a certain extent, and the performance of the battery 300 and the safety of the charging and discharging of the battery 300 may be guaranteed to a certain extent.

Referring to FIG. 21, in actual, the temperature sensor 370 may include a temperature sensing probe 371 and a conductive line 372. One end of the conductive line 372 is electrically connected with the protection board 330, and the other end of the conductive line 372 is electrically connected with the temperature sensing probe 371 to achieve the electrical connection between the temperature sensing probe 371 and the protection board 330.

Specifically, in the embodiment of the present application, the temperature sensing probe 371 is used to detect the temperature of the battery cell body 310 in the battery 300a. The temperature sensing probe 371 may include a sensor and an outer coating layer, where the outer coating layer covers the periphery of the sensor, as such, the outer coating layer may protect the internal sensor to a certain extent. In some specific examples, the outer coating layer may be an epoxy resin layer.

In order to improve the detection accuracy of the temperature sensor 370 on the temperature of the battery 300, in the embodiment of the present application, the temperature sensing probe 371 of the temperature sensor 370 may contact with the top sealing edge 343.

For example, referring to FIG. 21, the top sealing edge 343 is attached on the top end face 311 of the battery cell body 310, and the temperature sensing probe 371 is located between the top sealing edge 343 and the protection board 330, and the temperature sensing probe 371 contacts with the surface of the top sealing edge 343 on a side facing away from the battery cell body 310.

It may be understood that the top sealing edge 343 is made of an aluminum-plastic film, where an aluminum layer of the aluminum-plastic film has good thermal conductivity. During the charging and discharging process of the battery 300, heat generated by the battery cell body 310 may be quickly transferred to the outside through the aluminum layer of the aluminum-plastic film, that is, the temperature of the case 340 of the battery 300 is close to the temperature of the battery cell body 310, and the temperature difference is relatively low, the temperature of the top sealing edge 343 may accurately reflect the temperature of the battery cell body 310. In the embodiment of the present application, the temperature sensing probe 371 of the temperature sensor 370 contacts with the top sealing edge 343, as such, the temperature detected by the temperature sensor 370 may more accurately reflect the temperature of the battery cell body 310.

Exemplarily, the temperature sensing probe 371 may be located between the first region 330a of the protection board 330 and the top sealing edge 343. (It is to be noted that in FIG. 21, the structure of the first region of the protection board 330 is removed or hidden in order to facilitate observation of the temperature sensing probe 371). For example, when the encapsulation layer 332 of the protection board 330 is disposed towards the top sealing edge 343, there is a certain gap between the first region 330a and the top sealing edge 343 when the second region 330b is attached on the top sealing edge 343, since the second region 330b protrudes from the first region 330a, the temperature sensing probe 371 may be located in the gap, so as to reasonably utilize the free space between the protection board 330 and the battery cell, so that the structure of the battery is more compact.

Referring to FIG. 21, in some examples, the temperature sensing probe 371 of the temperature sensor 370 may be disposed near the protruding portion 341, for example, the temperature sensing probe 371 may be located at the end 343b of the top sealing edge 343. In FIG. 21, the main body portion 343a of the top sealing edge 343 is located at the left side of the broken line s, the end 343b of the top sealing edge 343 is located at the right side of the broken line s, and the end 343b is close to the protruding portion 341.

On the one hand, this can facilitate the installation of the temperature sensing probe 371, and in addition, this can separate the temperature sensing probe 371 from other electronic elements on the protection board 330, thereby avoiding the influence of heat generated by other electronic elements on the temperature sensor 370, and improving the accuracy of temperature detection by the temperature sensor 370. Compared with the prior art, this can stably detect the temperature of the battery during charging and discharging, and improve the cycle use times of the battery, that is, the battery life of the battery can be prolonged.

The temperature sensor 370 may be a thermistor in the previous embodiments, and the resistance value of the thermistor changes with the change of temperature. Thermistors may be divided into positive temperature coefficient thermistors and negative temperature coefficient thermistors according to different temperature coefficients, where the resistance value of positive temperature coefficient thermistors increases with the increase of temperature, and the resistance value of negative temperature coefficient thermistors decreases with the increase of temperature.

In the description of the present application, it is to be understood that the terms "center", "length ", "length", "thickness", "top", "bottom", "upper", "lower", "left", "right", "front", "back", "vertical", "horizontal", "inner", "outer", "axial", "circumferential", etc. are based on the orientation or position relationship shown in the drawings, and only for the purpose of convenient description of the present application and simplification of description, rather than indicating or implying that the indicated positons or elemets must have a specific orientation, be specifically configured and operated, and therefore cannot be understood as a limit on the present application.

In addition, the terms "first" and "second" are only for descriptive purposes, and cannot be understood as indicating or implying relative importance or implicitly indicating the number of indicated technical features. Therefore, the features defined with "first" and "second" may explicitly or implicitly include one or more of these features. In the description of the present application, "a plurality of' means at least two, for example, two, three, etc., unless otherwise specifically defined.

In the present application, unless otherwise specified and defined, the terms "installation", "connected", "connecting" and "fixation" should be broadly understood, for example, may be a fixed connection, a detachable connection or integrated connection; may be a mechanical connection, electrical connection, or may be in communication with each other; may be direct connection, may also be indirect connection through an intermediary, and may be an internal communication of two elements or the interaction between two elements. For those of skill in the art, the specific meanings of the above terms in the present application may be understood according to specific situations.

In the present application, unless otherwise specified and defined, the first feature being "on" or "below" the second feature may include the first feature and the second feature are in direct contact, or may include that the first feature and the second feature are not in direct contact but in contact through another feature therebetween. Moreover, the first feature being "over", "above" and "overhead" the second feature includes that the first feature is directly above and obliquely above the second feature, or only indicate that the horizontal height of the first feature is larger than the second feature. The first feature being "beneath", "under" and "below" the second feature includes that the first feature is directly under and obliquely under the second feature, or only indicate that the horizontal height of the first feature is smaller than the second feature.

Finally, it is to be noted that the above embodiments are only used to illustrate the technical solutions of the present application, but not to limit them; although the present application has been illustrated in detail with reference to the above embodiments, those of ordinary skill in the art should understand that they may still modify the technical solutions recorded in the above embodiments, make equivalent substitutions to some or all of the technical features thereof; and these modifications or substitutions do not make the essence of the corresponding technical solutions depart from the scope of the technical solutions of the embodiments of the present application.

## Claims

1. A battery, comprising:
a battery cell comprising a battery cell body and a tab extending from the battery cell body;
a case located at a periphery of the battery cell and formed with a top sealing edge, a side sealing edge and at least one protruding portion at edges of the battery cell body, wherein the top sealing edge is bent towards a top end face, and the top end face is an end face in a height direction of the battery cell body, and the protruding portion is located between the top sealing edge and the side sealing edge and extends towards the top end face; and
a protection board located on a side of the top sealing edge facing away from the top end face, and comprising a first region and a second region, wherein a height of the second region is greater than that of the first region; and the second region is connected with the tab, and the second region is disposed in a staggered manner with the protruding portion in a width direction of the battery cell body.

2. The battery according to claim 1, wherein the first region is disposed opposite to the protruding portion.

3. The battery according to claim 1, wherein the protection board comprises a substrate and an encapsulation layer; and in the second region, the substrate is provided with a plurality of electronic elements, and the encapsulation layer covers the plurality of electronic elements.

4. The battery according to claim 1, wherein a height of the second region protruding from the first region is 0.8 mm to 2.0 mm.

5. The battery according to claim 1, wherein a length of the first region is 2 mm to 15 mm.

6. The battery according to claim 1, wherein the height of the first region is 0.6 mm to 1.5 mm, and/or the height of the second region is 1.4 mm to 3.5 mm.

7. The battery according to claim 1, wherein the encapsulation layer of the protection board faces the top sealing edge, the first region covers the protruding portion, or the first region abuts against the protruding portion.

8. The battery according to claim 7, wherein the protruding portion comprises a first bending section and a second bending section; and
the first bending section is attached on the top sealing edge, the second bending section is located on a side of the first bending section facing away from the top sealing edge, and the first region covers the second bending section.

9. The battery according to claim 7, wherein the protruding portion comprises a first portion, a second portion and a third portion; and
the first portion is connected with the side sealing edge, the second portion is connected with the first portion and bent towards the top end face, and the third portion is located on a side of the second portion facing away from the first portion and is connected with the top sealing edge.

10. The battery according to claim 7, wherein a height of the protruding portion is less than or equal to a height of the second region protruding from the first region.

11. The battery according to claim 1, wherein the encapsulation layer of the protection board is disposed to face away from the top sealing edge, and the protruding portion is bent and disposed on a side of the first region of the protection board facing away from the top sealing edge.

12. The battery according to claim 1, wherein the first region and the protruding portion are connected by a first insulation layer.

13. The battery according to any one of claims 1 to 12, wherein two protruding portions are provided, and the two protruding portions are located at both ends of the top end face in the width direction; and
the second region is located between the two protruding portions.

14. The battery according to any one of claims 1 to 12, wherein a projection of the protection board and/or the tab onto a plane where the top end face is located is located within the top end face.

15. The battery according to claim 14, wherein the tab comprises a first connection section and a second connection section, and the second connection section is connected with the battery cell body through the first connection section, and at least part of the first connection section is located in the top sealing edge, and the second connection section is configured to be connected with the protection board.

16. The battery according to claim 15, wherein the battery cell body comprises a first surface and a second surface which are opposite in a thickness direction of battery cell body, and the top sealing edge is bent towards the first surface; and
a distance between a side of the first connection section close to the first surface and the first surface is greater than or equal to 0.2 mm, or a distance between a side of the first connection section close to the second surface and the second surface is greater than or equal to 0.2 mm.

17. The battery according to claim 15, wherein the second connection section is located between the protection board and the battery cell body, or the second connection section is located on a side of the protection board facing away from the battery cell body.

18. The battery according to claim 17, wherein the second connection section is located between the protection board and the battery cell body, and a second insulation layer is disposed between the second connection section and the top sealing edge, at least part of the second connection section is attached on an outer surface of the top sealing edge through the second insulation layer, and at least the second region in the protection board is attached on the second insulation layer.

19. The battery according to any one of claims 1 to 12, wherein a third insulation layer is attached on a side of the protection board facing away from the battery cell body, at least part of the third insulation layer covers the protection board, and another part of the third insulation layer is connected with the battery cell body to fix the protection board.

20. The battery according to any one of claims 1 to 12, wherein the battery further comprises a temperature sensor electrically connected with the protection board; and
a temperature sensing probe of the temperature sensor is located between the first region and the top sealing edge; or, the temperature sensing probe of the temperature sensor is disposed close to the protruding portion.
